# EUROPEAN PATENT APPLICATION

(11) **EP 1 786 115 A1**
(43) Date of publication of application: **16.05.2007**
(21) Application number: 05776692.5
(22) Date of filing: 02.09.2005
(51) Int. Cl.: H04B 3/54, H04J 1/16

(54) **DATA COMMUNICATION SYSTEM, DATA TRANSMITTING APPARATUS, DATA RECEIVING APPARATUS, DATA COMMUNICATION METHOD AND DATA COMMUNICATION PROGRAM**

(30) Priority: 02.09.2004 JP 2004255415; 11.08.2005 JP 2005233822
(71) Applicant: MITSUBISHI MATERIALS CORPORATION, Tokyo 100-8117 (JP)
(72) Inventor: YAMASHITA, Nobuyuki, Mitsubishi Materials Corp., Chichibu-gun, Saitama 3688502 (JP); TARI, Kazuyoshi, Mitsubishi Materials Corp., Chichibu-gun, Saitama 3688502 (JP); NAKAMURA, Kenzo, Mitsubishi Materials Corp., Chichibu-gun, Saitama 3688502 (JP)
(74) Representative: HOFFMANN EITLE
(86) International application number: PCT/JP2005/016080
(87) International publication number: WO 2006/025513

(57) **Abstract**

There is provided a data communication system that performs power line communication having satisfactory communication quality by disposing data in channels where notches or noises do not exist in a distributed manner. There is included a step S01 of transmitting a pilot tone from a data transmitting device to a data receiving device, a step S03 of detecting a frequency band where a notch exists, among frequency bands used for the power line communication, on the basis of the pilot tone by means of the data receiving device, a step S05 of transmitting information on the frequency band where the notch exists, as channel information, to the data transmitting device by means of the data receiving device, a step S07 of setting a channel, which is located within a frequency band where a notch does not exist, as a channel used for the power line communication, by means of the data transmitting device, and a step S09 of disposing data, which is to be transmitted, in each channel and then transmitting the data to the data receiving device, by means of the data transmitting device.

## Description

### Technical Field

The present invention relates to a data communication system, a data transmitting device, a data receiving device, a data communication method, and a data communication program, which perform data communication through a power line.

### Background Art

In the related art, there is known a method of selecting a used sub-channel so as to perform communication when a notch, which is a cause of deterioration of communication quality, exists in a part of frequencies used for the communication (refer to Patent Document 1).
In the communication method disclosed in Patent Document 1, a channel where a notch does not exist is used for communication in order to increase the communication quality related to audio data and visual data. In the communication method, it is necessary to increase the transmission power in order to increase the S/N ratio (signal-to-noise ratio) of a used channel. However, when the transmission power increases to increase the S/N ratio, a problem has occurred in that the leakage electric field also increases.

Patent Document 1: JP-A-2000-216752

### Disclosure of the Invention

### Problem that the Invention is to solve

The invention has been made in view of the drawbacks inherent in the related art, and it is an object of the invention to provide a data communication system, a data transmitting device, a data receiving device, a data communication method, and a data communication program, which perform power line communication having satisfactory communication quality by disposing data in channels where notches or noises do not exist in a distributed manner.

### Means for Solving the Problem

According to a first aspect of the invention, there is provided a data communication system that performs power line communication between a data transmitting device and a data receiving device. The data transmitting device includes: a pilot tone transmitting unit that transmits a pilot tone to the data receiving device; a channel information receiving unit that receives channel information, which is information on a frequency band where a notch or noise does not exist and is returned from the data receiving device in response to the pilot tone transmitted from the pilot tone transmitting unit; a transmission channel setting unit that sets a channel used at the time of the power line communication on the basis of the channel information received by the channel information receiving unit; a first data processing unit that performs a process of disposing data, which is to be transmitted, in the channel set by the transmission channel setting unit; and a data transmitting unit that transmits the data, which has been processed by the first data processing unit, to the data receiving device through a power line. The data receiving device includes: a pilot tone receiving unit that receives the pilot tone from the data transmitting device; a detection unit that detects a notch or noise, which exists within a frequency band used for communication, according to a receiving state of the pilot tone received by the pilot tone receiving unit; a use channel selection unit that selects a channel used when performing the power line communication, avoiding a frequency band where the notch or the noise detected by the detection unit exists; a channel information transmitting unit that transmits information on the channel selected by the use channel selection unit, as channel information, to the data transmitting device; a data receiving unit that receives data from the data transmitting device; a second data processing unit that performs a data restoring process by using data, which has been received by the data receiving unit, disposed in a channel where a notch or noise does not exist; and a data reproducing unit that reproduces the data restored by the second data processing unit.

Further, according to a second aspect of the invention, in the data communication system according to the first aspect of the invention, preferably, the pilot tone transmitting unit disposes pilot tones in a plurality of channels that are selected while avoiding a frequency band in which a notch or noise exists and which has been detected beforehand.

Furthermore, according to a third aspect of the invention, in the data communication system according to the first or second aspect of the invention, preferably, the use channel selection unit changes only a channel within a frequency band, in which a notch or noise which has been detected by the notch detection unit exists, among a plurality of channels, so as to be located within a frequency band where the notch or the noise does not exist.

Furthermore, according to a fourth aspect of the invention, a data transmitting device that transmits data to a data receiving device through a power line includes: a pilot tone transmitting unit that transmits a pilot tone to the data receiving device; a channel information receiving unit that receives channel information, which is information on a frequency band where a notch or noise does not exist and is returned from the data receiving device in response to the pilot tone transmitted from the pilot tone transmitting unit; a transmission channel setting unit that sets a channel used at the time of power line communication on the basis of the channel information received by the channel information receiving unit; a first data processing unit that performs a process of disposing data, which is to be transmitted, in the channel set by the transmission channel setting unit; and a data transmitting unit that transmits the data, which has been processed by the first data processing unit, to the data receiving device through the power line.

Furthermore, according to a fifth aspect of the invention, a data receiving device that receives data from a data transmitting device through a power line includes: a pilot tone receiving unit that receives a pilot tone from the data transmitting device; a detection unit that detects a notch or noise, which exists within a frequency band used for communication, according to a receiving state of the pilot tone received by the pilot tone receiving unit; a use channel selection unit that selects a channel used when performing power line communication, avoiding a frequency band where the notch or the noise detected by the detection unit exists; a channel information transmitting unit that transmits information on the channel selected by the use channel selection unit, as channel information, to the data transmitting device; a data receiving unit that receives data from the data transmitting device; a second data processing unit that performs a data restoring process by using data, which has been received by the data receiving unit, disposed in a channel where a notch or noise does not exist; and a data reproducing unit that reproduces the data restored by the second data processing unit.

Furthermore, according to a sixth aspect of the invention, a data communication method when performing power line communication between a data transmitting device and a data receiving device includes: a first step of transmitting a pilot tone from the data transmitting device to the data receiving device; a second step of detecting a frequency band where a notch or noise exists, among frequency bands used for the power line communication, on the basis of the pilot tone transmitted from the data transmitting device in the first step, by means of the data receiving device; a third step of transmitting information on the frequency band, in which the notch or the noise exists and which has been detected in the second step, as channel information, to the data transmitting device by means of the data receiving device; a fourth step of setting a channel, which is located within a frequency band where a notch or noise does not exist, as a channel used for the power line communication on the basis of the channel information transmitted from the data receiving device in the third step, by means of the data transmitting device; and a fifth step of disposing data, which is to be transmitted, in the channel set in the fourth step and then transmitting the data to the data receiving device, by means of the data transmitting device.

Furthermore, according to a seventh aspect of the invention, in the data communication method according to the sixth aspect of the invention, preferably, in the first step, the pilot tone is transmitted from the data transmitting device to the data receiving device while consecutively changing a frequency of the pilot tone, and in the second step, the data receiving device detects the frequency band where the notch or the noise exists, among the frequency bands used for the power line communication, on the basis of the pilot tone whose frequency consecutively changes and which has been transmitted from the data transmitting device in the first step.

Furthermore, according to an eighth aspect of the invention, in the data communication method according to the sixth or seventh aspect of the invention, preferably, a frequency band where a notch or noise does not exist is detected at predetermined time intervals even while the power line communication between the data transmitting device and the data receiving device is being performed, and a channel used for the power line communication is changed to a channel within the frequency band where the notch or the noise does not exist.

Furthermore, according to a ninth aspect of the invention, a data communication program when performing power line communication between a data transmitting device and a data receiving device causes a computer to execute: a first step of transmitting a pilot tone from the data transmitting device to the data receiving device; a second step of detecting a frequency band where a notch or noise exists, among frequency bands used for the power line communication, on the basis of the pilot tone transmitted from the data transmitting device in the first step, by means of the data receiving device; a third step of transmitting information on the frequency band, in which the notch or the noise exists and which has been detected in the second step, as channel information, to the data transmitting device by means of the data receiving device; a fourth step of setting a channel, which is located within a frequency band where a notch or noise does not exist, as a channel used for the power line communication on the basis of the channel information transmitted from the data receiving device in the third step, by means of the data transmitting device; and a fifth step of disposing data, which is to be transmitted, in the channel set in the fourth step and then transmitting the data to the data receiving device, by means of the data transmitting device.

### Advantage of the Invention

According to the first aspect of the invention, when performing the power line communication between the data transmitting device and the data receiving device, the communication is performed avoiding a frequency band where a notch or noise exists. Accordingly, since the power line communication can be performed by using a channel within a frequency band where a notch or noise does not exist, the communication quality can be improved.

According to the second aspect of the invention, the pilot tone transmitting unit disposes pilot tones in a plurality of channels that are selected while avoiding a frequency band in which a notch or noise exists and which has been detected beforehand. That is, by transmitting the pilot tone according to the pattern of a channel that is selected while avoiding notch pattern or noise pattern detected beforehand, the detection of a notch or noise can be performed within a short period of time as compared with a case of sweeping the entire frequency bands used for communication with the pilot tone. Thus, the invention is suitable for data communication in a home or the like where the notch pattern or the noise pattern does not change greatly.

According to the third aspect of the invention, the use channel selection unit changes only a channel within a frequency band, in which a notch or noise which has been detected by the detection unit exists, among the plurality of channels, so as to be located within a frequency band where the notch or the noise does not exist. Accordingly, as compared with a case in which the entire channels are changed when a notch occurs, it is easy to cope with the pattern change of a notch or noise occurring due to, for example, additional connection of home electric appliances, by dynamically changing only a channel corresponding to deteriorated data (carrier). Thus, the invention is suitable for real-time application, such as an audio device.

According to the fourth aspect of the invention, the first data processing unit disposes data in a channel located within a frequency band where a notch or noise does not exist, and the data is transmitted to the data receiving device. Thus, since the power line communication is performed by selecting a channel having satisfactory communication quality, it is possible to reduce the power consumption and to improve the communication quality.

Further, according to the fifth aspect of the invention, the detection unit detects a frequency band where a notch or noise exists, and the channel information on a frequency band where a notch or noise does not exist is transmitted to the data transmitting device. Accordingly, it is possible to receive, from the data transmitting device, the data disposed in a channel within a frequency band where a notch or noise does not exist and the communication quality is satisfactory.

Furthermore, according to the sixth aspect of the invention, between the data transmitting device and the data receiving device, a channel within a frequency band where a notch or noise does not exist is detected and thus the power line communication is performed by using the channel. Accordingly, since the number of channels used by the data transmitting device decreases, it is possible to reduce the power consumption and to perform the power line communication having satisfactory communication quality.

Furthermore, according to the seventh aspect of the invention, the frequency of a pilot tone transmitted from the data transmitting device is consecutively changed so as to detect a notch or noise. Accordingly, it is possible to find a band, in which a notch or noise exists, over the entire frequency bands used for the power line communication and thus to perform the power line communication having satisfactory communication quality by selecting a channel to be used on the basis of the information.

Furthermore, according to the eighth aspect of the invention, with respect to a frequency band used for the power line communication, it is detected whether or not a notch or noise exists at predetermined time intervals. Accordingly, even if the notch or noise occurs in a used channel while the power line communication is being performed, it is possible to always perform the power line communication having satisfactory communication quality by resetting a channel within a frequency band where a notch or noise does not exist.

Furthermore, according to the ninth aspect of the invention, the program makes a control such that, between the data transmitting device and the data receiving device, a channel within a frequency band where a notch or noise does not exist is detected and the power line communication is performed by using the channel. Thus, since the number of channels used by the data transmitting device decreases, it is possible to reduce the power consumption and to perform the power line communication having satisfactory communication quality.

### Brief Description of the Drawings

Fig. 1 is a sequence view illustrating the flow of a process in a data communication system 10 according to a first embodiment of the invention;
Fig. 2 is a view illustrating the configuration of the data communication system 10 according to the first embodiment;
Fig. 3 is a block diagram illustrating the configuration of a data transmitting device 2 according to the first embodiment;
Fig. 4 is a view illustrating a circuit 11 that performs a data operation process in the first embodiment;
Fig. 5 is a block diagram illustrating the configuration of a data receiving device 3 according to the first embodiment;
Fig. 6 is a view illustrating waveforms of data when performing data communication according to the first embodiment;
Fig. 7 is a view illustrating the combination of waveforms of pilot tones when performing data communication according to a second embodiment of the invention; and
Fig. 8 is a view illustrating the disposition change of a channel corresponding to deteriorated carrier when performing the data communication according to the second embodiment.

### Description of Reference Numerals and Signs

- 1:: POWER LINE
- 10:: DATA COMMUNICATION SYSTEM
- 2:: DATA TRANSMITTING DEVICE
- 21:: PILOT TONE TRANSMITTING UNIT
- 22:: CHANNEL INFORMATION RECEIVING UNIT
- 23:: TRANSMISSION CHANNEL SETTING UNIT
- 24:: DATA STORAGE UNIT
- 25:: DATA PROCESSING UNIT
- 26:: DATA TRANSMITTING UNIT
- 3:: DATA RECEIVING DEVICE
- 31:: PILOT TONE RECEIVING UNIT
- 32:: NOTCH DETECTION UNIT (DETECTOR)
- 33:: USE CHANNEL SELECTION UNIT
- 34:: CHANNEL INFORMATION TRANSMITTING UNIT
- 35:: DATA RECEIVING UNIT
- 36:: DATA PROCESSING UNIT
- 37:: DATA REPRODUCING UNIT

### Best Mode for Carrying Out the Invention

Hereinafter, a first embodiment of the invention will be described with reference to the accompanying drawings.

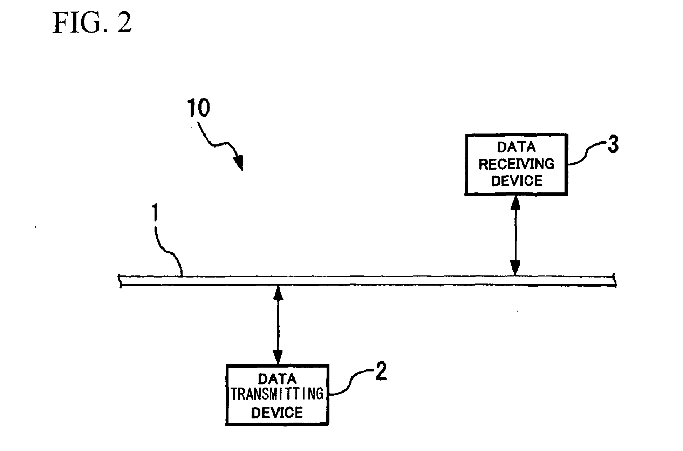

Fig. 2 is a view illustrating the configuration of a data communication system 10 according to the first embodiment of the invention.
The data communication system 10 includes a power line 1, a data transmitting device 2, and a data receiving device 3.
The data transmitting device 2 is connected to the power line 1. Power for driving the data transmitting device 1 is supplied from the power line 1 to the data transmitting device 2. In addition, the data transmitting device 2 transmits / receives data to / from the data receiving device 3 through the power line 1.
The data receiving device 3 is connected to the power line 3. Power for driving the data receiving device 3 is supplied from the power line 1 to the data receiving device 3. In addition, the data receiving device 3 transmits / receives data to / from the data transmitting device 2 through the power line 1.

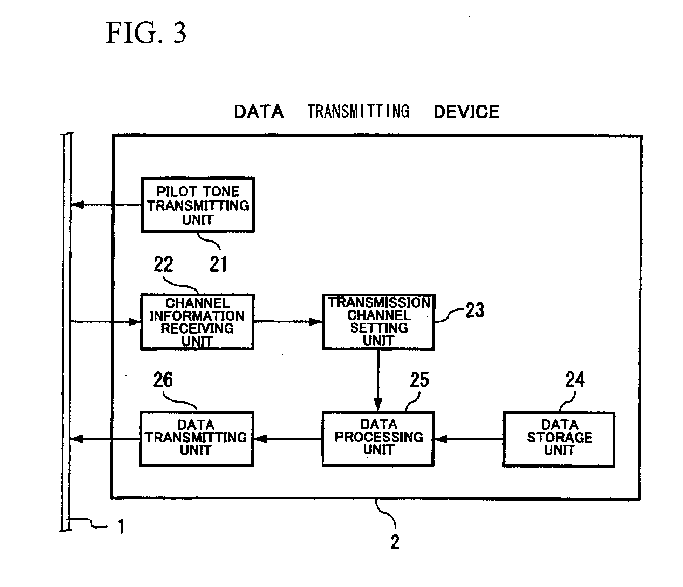

Fig. 3 is a block diagram illustrating the configuration of the data transmitting device 2 according to the present embodiment.
The data transmitting device 2 includes a pilot tone transmitting unit 21, a channel information receiving unit 22, a transmission channel setting unit 23, a data storage unit 24, a data processing unit 25, and a data transmitting unit 26.
The pilot tone transmitting unit 21 consecutively changes the frequency of a pilot tone. Data of a pilot tone whose frequency consecutively changes is transmitted to the data receiving device 3 through the power line 1.

The channel information receiving unit 22 receives 'channel information' from the data receiving device 3 through the power line 1, the 'channel information' being information on a channel within a frequency band where a notch exists, among frequency bands used for the power line communication. In addition, the channel information receiving unit 22 transmits the 'channel information', which has been received through the power line 1, to the transmission channel setting unit 23.
The transmission channel setting unit 23 selects a channel within a frequency band where a notch does not exist, which is used when performing power line communication between the data transmitting device 2 and the data receiving device 3, on the basis of the 'channel information' input from the channel information receiving unit 22.

The data storage unit 24 stores, for example, music data or video data that is to be transmitted from the data transmitting device 2 to the data receiving device 3. The data stored in the data storage unit 24 is output to the data processing unit 25.
The data processing unit 25 performs a process of disposing the data input from the data storage unit 24 within a frequency band where a notch does not exist in a distributed manner, by using the channel set by the transmission channel setting unit 23, and then outputs the data to the data transmitting unit 26.
The data transmitting unit 26 transmits the data, which has been input from the data processing unit 25, to the data receiving device 3 through the power line 1.

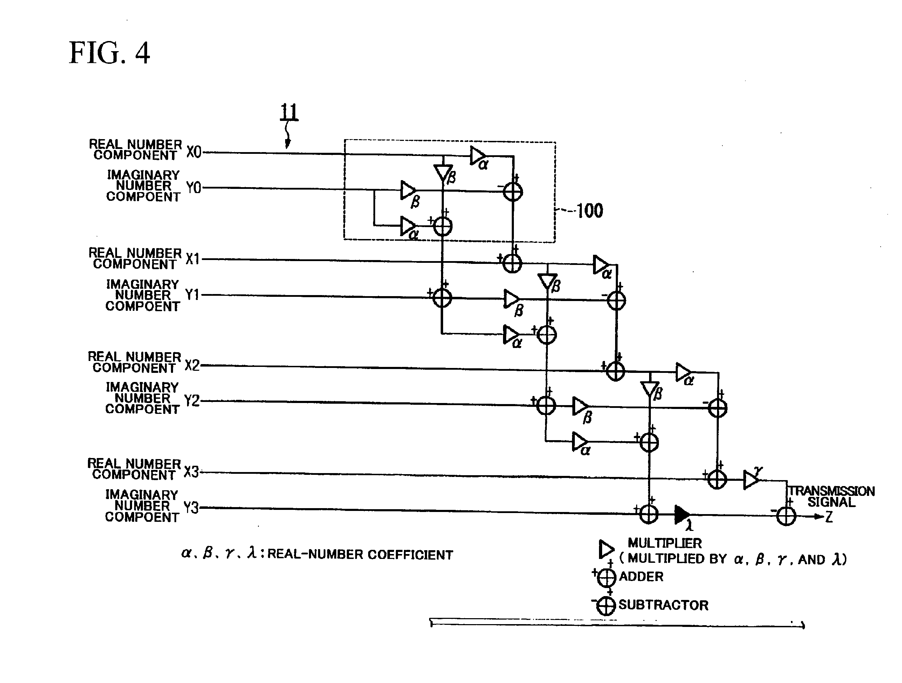

Moreover, the data processing unit 25 includes a circuit 11 shown in Fig. 4. The data processing unit 25 performs a multiplying process using coefficients α and β recorded in a coefficient table (not shown) and repeatedly performs adding and subtracting processes, with respect to four sub-channels X0 - Y0, X1 - Y1, X2 - Y2, and X3 - Y3. Hereinafter, a processing method in the circuit 11 shown in Fig. 4 will be specifically described.
First, on the basis of a result obtained by multiplying the sub-channel X0 - Y0 by a center frequency, a result of multiplying the sub-channel X1 - Y1 by the center frequency is obtained. Then, on the basis of the result obtained by multiplying the sub-channel X1 - Y1 by the center frequency, a result of multiplying the sub-channel X2 - Y2 by the center frequency is obtained. Then, on the basis of the result obtained by multiplying the sub-channel X2 - Y2 by the center frequency, a result of multiplying the sub-channel X3 - Y3 by the center frequency is obtained.
Thus, the data processing unit 25 calculates a multi-channel signal Z, which is a transmission signal, by using a recursive process.

In addition, referring to Fig. 4, a unit operation section 100 includes a combination of a multiplier, an adder, and a subtractor that are needed to process each of the sub-channels in the unit of a sub-channel. Here, in the case when the number of sub-channels to be processed needs to be increased, the unit operation sections 100 as many as the number to be increased may be connected to one another in a multi-stage manner.
Thus, by using the recursive process, it becomes easy to change the configuration of hardware in correspondence with the change of the number of sub-channels to be transmission-processed in a multi-channel communication system.
By configuring the data processing unit 25 as shown in Fig. 4, data can be disposed in a sub-channel within a frequency band where a notch does not exist, in a distributed manner, without using a sub-channel within a frequency band where a notch exists for the data transmission. Accordingly, power line communication having satisfactory communication quality can be performed.

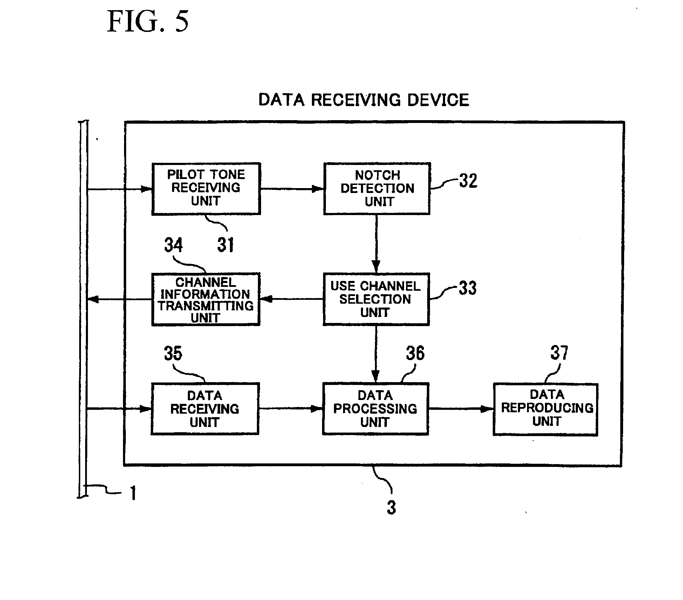

Fig. 5 is a block diagram illustrating the configuration of the data receiving device 3 according to the present embodiment.
The data receiving device 3 includes a pilot tone receiving unit 31, a notch detection unit (detector) 32, a use channel selection unit 33, a channel information transmitting unit 34, a data receiving unit 35, a data processing unit 36, and a data reproducing unit 37.
The pilot tone receiving unit 31 receives data of the pilot tone, which is transmitted from the data transmitting device 2 through the power line 1, and then outputs the received data to the notch detection unit 32.

The notch detection unit 32 examines the state of a notch of the pilot tone input from the pilot tone receiving unit 31, detects as 'notch information' information on a frequency band where the notch exists, and outputs the detected 'notch information' to the use channel selection unit 33.
The use channel selection unit 33 selects a channel within a frequency band where the notch does not exist, which is used when performing power line communication with the data transmitting device 2, on the basis of the 'notch information' input from the notch detection unit 32, and then transmits the selected channel, as 'channel information', to the data transmitting device 2 through the power line 1. In addition, the use channel selection unit 33 outputs the 'channel information' to the data processing unit 35.

The data receiving unit 35 receives the 'data', which is transmitted from the data transmitting device 2, through the power line 1, and then outputs the received 'data' to the data processing unit 36.
The data processing unit 36 restores the data, which is input from the data receiving unit 35 and is disposed in a channel within a frequency band where a notch does not exist in a distributed manner, on the basis of the 'channel information' input from the use channel selection unit 33, and then outputs the restored data to the data reproducing unit 37.
The data reproducing unit 37 reproduces the 'data' input from the data processing unit 35.

Furthermore, the above-described units of the data communication system 10, that is, the pilot tone transmitting unit 21, the channel information receiving unit 22, the transmission channel setting unit 23, the data storage unit 24, the data processing unit 25, the data transmitting unit 26, the pilot tone receiving unit 31, the notch detection unit 32, the use channel selection unit 33, the channel information transmitting unit 34, the data receiving unit 35, the data processing unit 36, and the data reproducing unit 37, etc., may be implemented by using dedicated hardware. Alternatively, it may be possible to realize functions of the above-described units by configuring each of the units as a computer system by means of a memory and a CPU (central processing unit) and then by loading onto the memory a program for realizing the functions of the units and a data communication method according to the present embodiment to be described later and by executing the program.
That is, the program is a computer-readable program and may be provided to realize a part of the above-described functions and the data communication method. Alternatively, the program may be a so-called differential file (differential program) by which the above functions can be realized in combination with a program recorded beforehand in the computer system.

In addition, the program may be transmitted from a computer system, which has a storage unit or the like that stores the program, to another computer system through a transmission medium or a transmission wave among transmission media. The transmission medium means a medium having a function of transmitting information, and for example, includes a network (communication network) such as Internet, and a communication line such as a power line or a telephone line.
In addition, the memory is configured to use a hard disk drive or a magneto-optical disk drive, a non-volatile memory such as a flash memory, a read-only recording medium such as a CD-ROM, a volatile memory such as a RAM (random access memory), or a recording medium that is formed by the combination of those described above so as to be readable and writable by a computer.

Next, an operation of the data communication system 10 according to the present embodiment will be described.

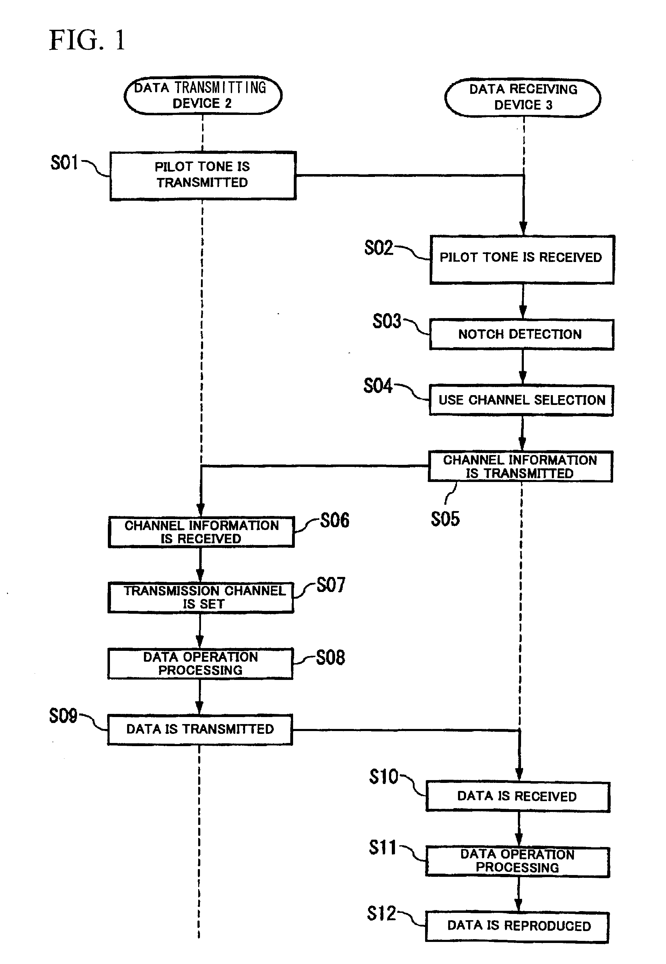

Fig. 1 is a view illustrating the sequence of the operation of the data communication system 10 according to the present embodiment.

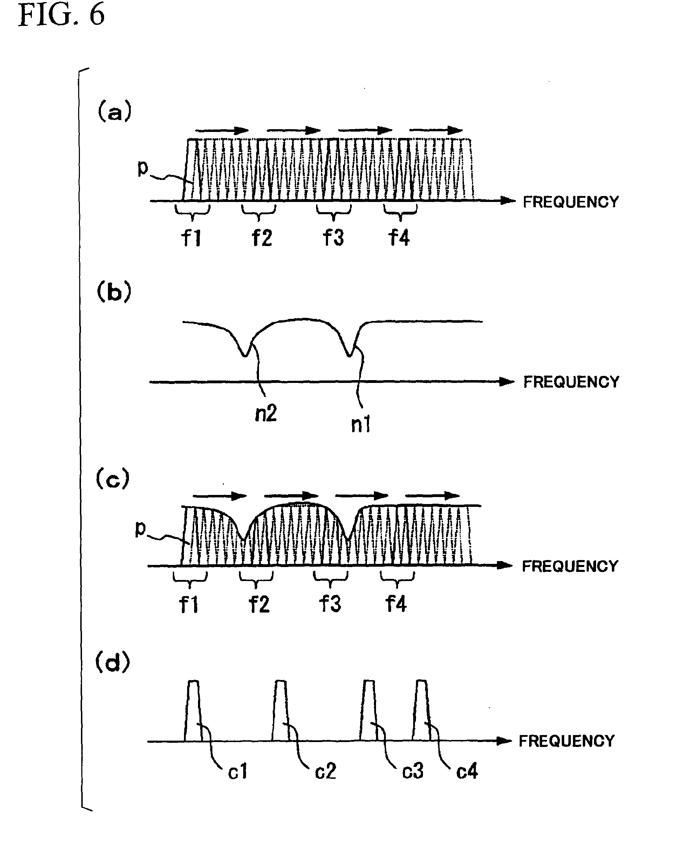

First, as shown in Fig. 6 (a), the pilot tone transmitting unit 21 of the data transmitting device 2 transmits a pilot tone P to the data receiving device 3 through the power line 1 while consecutively changing the frequency of the pilot tone P to f1, f2, f3, and f4 (step S01).
Here, it will be described about a case in which notches n1 and n2 shown in Fig. 6 (b) occur in a frequency band received by the data receiving device 3 due to effects of home electric appliances or the like existing around the power line 1.

The pilot tone receiving unit 31 of the data receiving device 3 receives, through the power line 1, the pilot tone transmitted from the pilot tone transmitting unit 21 of the data transmitting device 2 (step S02).
Then, the notch detection unit 32 of the data receiving device 3 detects whether or not a notch exists within a used frequency band of the received pilot tone (step S03).
Since the notches n1 and n2 shown in Fig. 6 (b) occur under the communication circumstances of the power line between the data transmitting device 2 and the data receiving device 3, distortion corresponding to the notches n1 and n2 also occurs to a pilot tone (refer to Fig. 6 (c)) received by the pilot tone receiving unit 31 of the data receiving device 3.

Thereafter, the use channel selection unit 33 of the data receiving device 3 selects a channel used in the power line communication while avoiding a frequency band in which the notches which have been detected by the notch detection unit 32 exist (step S04).
Then, the channel information transmitting unit 34 of the data receiving device 3 transmits as 'channel information' channels c1, c2, c3, and c4 (refer to Fig. 6 (d)), which has been selected by the use channel selection unit 33, within the frequency band in which a notch does not exist, to the channel information receiving unit 22 of the data transmitting device 2 through the power line 1 (step S05).

The 'channel information' transmitted from the channel information transmitting unit 34 is received by the channel information receiving unit 22 of the data transmitting device 2 (step S06).
The transmission channel setting unit 23 of the data transmitting device 2 sets the channels c1, c2, c3, and c4 (refer to Fig. 6 (d)) within the frequency band in which a notch does not exist, which are used for the power line communication, on the basis of the 'channel information' received by the channel information receiving unit 22 (step S07).

The data processing unit 25 of the data transmitting device 2 performs a process of disposing the data stored in the data storage unit 24 in each channel in a distributed manner, such that the power line communication can be performed by using the channels c1, c2, c3, and c4 set by the transmission channel setting unit 23 (step S08).
The data transmitting unit 26 of the data transmitting device 2 transmits the data, which is disposed in the channels where the notch does not exist by means of the data processing unit 25, to the data receiving unit 35 of the data receiving device 3 through the power line 1 (step S09).

The data receiving unit 35 of the data receiving device 3 receives data from the data transmitting device 2 through the power line 1 (step S10).
Subsequently, the data processing unit 35 of the data receiving device 3 restores the data, which has been received by the data receiving unit 35 and is disposed in channels where a notch does not exist (step S11).
The data reproducing unit 37 of the data receiving device 3 reproduces the 'data' restored by the data processing unit 36 (step S12).

In power line communication using the power line 1 in the related art, there has been a problem in that power output from the data transmitting device 2 cannot be so increased due to the leakage electric field or power consumption. However, in the above-described data communication system 10 according to the embodiment of the invention, since the power line communication is performed by disposing transmitted data in channels within frequency bands where notches do not occur in a distributed manner, it is possible to reduce the power consumption required for the communication and to perform the power line communication while keeping a satisfactory communication quality.
In addition, since it is possible to reduce the power consumption required for the power line communication, the leakage electric field generated by the power line 1 can also be reduced. As a result, the power line communication can be performed under the state in which the communication quality is further reliable.

In particular, a problem occurs in that a communication speed equal to or larger than a predetermined speed should always be ensured, in order to keep the audio quality in the case of an audio device or in order to display images consecutively transmitted in the case of a video device; however, the problem can be solved by using the data communication system according to the present embodiment.
In addition, since the power line communication is not performed by using all multi-channels but some of the multi-channels where notches do not exist are selectively used, the power consumed by the data transmitting device 2 may be reduced.

Furthermore, in the embodiment, it has been described about the case in which the detection of notches is performed only once, before starting the power line communication, in step S03 shown in Fig. 1; however, the invention is not limited thereto. For example, by consecutively detecting the notches even while the power line communication between the data transmitting device 2 and the data receiving device 3 is being performed, it is possible to always perform the communication using a channel within a frequency band where a notch does not exist. With the configuration described above, it is possible to improve the communication quality when performing the power line communication.

Further, in the embodiment described above, it has been described about the case in which the notch detection unit 32 of the data receiving device 3 examines the state of the pilot tone transmitted from the pilot tone transmitting unit 21 of the data transmitting device 2 in order to detect a frequency band where a notch exists; however, the invention is not limited thereto.
For example, the frequency band where a notch exists may be detected by concurrently transmitting pilot tones over the entire frequency bands used for communication and then making the pilot tones received by the data receiving device 3, without consecutively changing the frequency of a pilot tone. Thus, it is possible to perform the power line communication using a frequency band where a notch does not exist.
Furthermore, it is possible that an arbitrary channel within a frequency band where communication is performed by the data transmitting device 2 is selected so as to transmit a pilot tone, and then only when the data receiving device 3 detects that a notch exists in the channel, a channel within a separate frequency band may be reselected to perform the power line communication.

In addition, in the embodiment, it has been described about the case in which the power line communication is performed by using four or eight channels; however, the invention is not limited thereto. For example, it is possible to perform the power line communication by using an arbitrary number of channels.

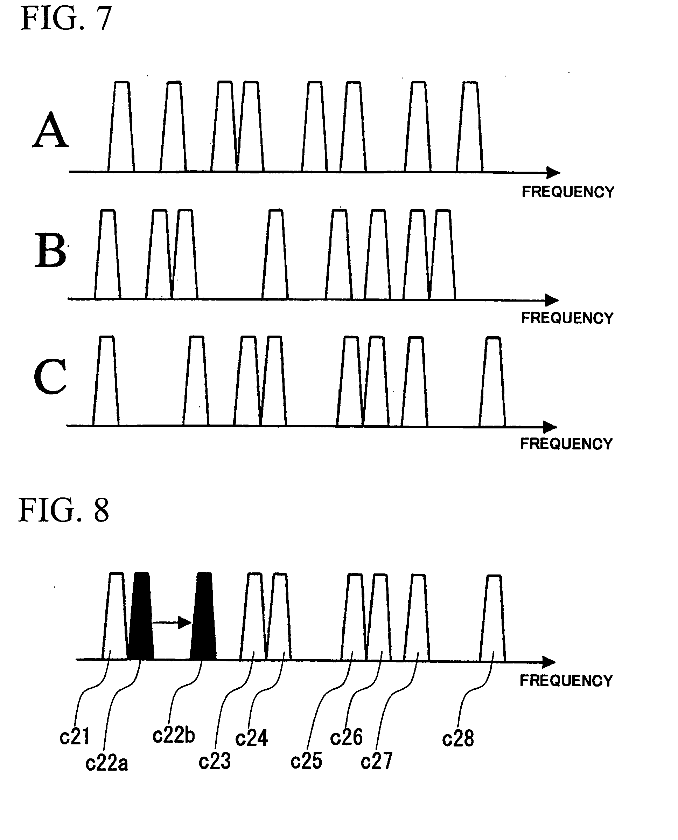

Next, a second embodiment of the invention will be described with reference to Figs. 7 and 8. In addition, in the embodiment to be described below, the same elements as in the first embodiment are denoted by the same reference numerals, and detailed explanation thereof will be omitted.

The second embodiment is different from the first embodiment in that the frequency bands where notches exist are detected by entirely sweeping pilot tones in the first embodiment, while the pilot tone transmitting unit 21 disposes the pilot tones in a plurality of channels selected while avoiding frequency bands in which notches exist and which have been detected beforehand in the second embodiment.

In other words, an in-home wiring line for the power line 1 is generally fixed, and a plurality of open stubs (outlets) become short-circuited when home electric appliances are used. Furthermore, in many cases, since the same kinds of home electric appliances are generally used in homes, the patterns of notches that occur are limited. Accordingly, the propagation characteristic in the data communication is limited to approximately several to several tens of combination patterns and does not change abruptly.

For this reason, in a data communication system according to the second embodiment, the notch detection is performed beforehand while changing the use states of a plurality of home electric appliances which may be used as many as several to several tens of patterns, and thus several to several tens of notch patterns are stored. In addition, as shown in Fig. 7, the pilot tone transmitting unit 21 sets channel disposition patterns A to C while avoiding the stored notch patterns, disposes a pilot pattern in each of the channels of the disposition patterns, and then transmits the pilot tone. Alternatively, by storing notch patterns one by one which are separately obtained whenever the notch detection is performed, a pattern of a channel where the pilot pattern is disposed may be changed.

As described above, by transmitting the pilot tone according to a pattern of a channel selected avoiding notch patterns detected beforehand, the notch detection can be performed within a short period of time as compared with a case of sweeping the entire frequency bands used for communication by means of the pilot tone. Thus, the second embodiment is suitable for data communication in a home or the like where the notch pattern does not change abruptly.

Furthermore, the second embodiment is different from the first embodiment in that the use channel selection unit 33 changes only a channel within a frequency band, in which a notch which has been detected by the notch detection unit 32 exists, among a plurality of channels, so as to be located within a frequency band where a notch does not exist. That is, in the first embodiment, if a notch occurs when home electric appliances or the like are additionally connected, the entire channels are changed so as to avoid the notch. On the other hand, in the second embodiment, only a channel corresponding to data (carrier) deteriorated by the notch is dynamically changed one by one so as to be located within a frequency band where a notch does not exist.

For example, a case will be described below in which the transmission channel setting unit 23 sets channels c21, c22a, c23, c24, c25, c26, c27, and c28 on the basis of 'channel information' received by the channel information receiving unit 22, which is shown in Fig. 8.

In this case, the data processing unit 25 performs a disposition process such that data is distributed in each of the channels, and the data transmitting unit 26 transmits the data through the power line 1.
At this time, assuming that a notch occurs in a frequency band of the channel c22a due to home electric appliances additionally connected to the power line 1 and thus data (carrier) disposed in the channel c22a deteriorates, the notch detection unit 32 detects the notch on the basis of a result of the received pilot tone. In addition, the use channel information transmitting unit 33 relocates only the data (carrier) disposed in the channel c22a in the channel c22b, which is located in a different frequency band, so as to avoid the channel c22a located in a frequency band where a notch exists.

Therefore, in the second embodiment, as compared with a case in which the entire channels are changed when a notch occurs, it is easy to cope with the pattern change of a notch occurring due to, for example, additional connection of home electric appliances, by dynamically changing only a channel corresponding to deteriorated data (carrier) to a channel located in a frequency band where the notch does not exist. Accordingly, the second embodiment is suitable for real-time application, such as an audio device.

Having described the embodiments of the invention referring to the accompanying drawings, it should be understood that the specific configuration is not limited to those embodiments but various changes and modifications thereof could be made without departing from the purport of the invention.
For example, in the embodiments described above, by detecting a notch, the power line communication using a frequency band where the notch does not exist is performed. However, in the same manner as described above, by detecting noise not the notch, power line communication using a frequency band where the noise does not exist may be performed.

### Industrial Applicability

The data communication system used in the power line communication according to the invention may be applied to an audio device in which the sound quality deteriorates if the communication quality is lowered or to a video device in which consecutively transmitted image data needs to be displayed without delay.

## Claims

1. A data communication system comprising:
a data transmitting device; and
a data receiving device,
wherein the data communication system performs power line communication between the data transmitting device and the data receiving device,
the data transmitting device includes:
a pilot tone transmitting unit that transmits a pilot tone to the data receiving device;
a channel information receiving unit that receives channel information, which is information on a frequency band where a notch or noise does not exist and is returned from the data receiving device in response to the pilot tone transmitted from the pilot tone transmitting unit;
a transmission channel setting unit that sets a channel used at the time of the power line communication on the basis of the channel information received by the channel information receiving unit;
a first data processing unit that performs a process of disposing data, which is to be transmitted, in the channel set by the transmission channel setting unit; and
a data transmitting unit that transmits the data, which has been processed by the first data processing unit, to the data receiving device through a power line, and
the data receiving device includes:
a pilot tone receiving unit that receives the pilot tone from the data transmitting device;
a detection unit that detects a notch or noise, which exists within a frequency band used for communication, according to a receiving state of the pilot tone received by the pilot tone receiving unit;
a use channel selection unit that selects a channel used when performing the power line communication, avoiding a frequency band where the notch or the noise detected by the detection unit exists;
a channel information transmitting unit that transmits information on the channel selected by the use channel selection unit, as channel information, to the data transmitting device;
a data receiving unit that receives data from the data transmitting device;
a second data processing unit that performs a data restoring process by using data, which has been received by the data receiving unit, disposed in a channel where a notch or noise does not exist; and
a data reproducing unit that reproduces the data restored by the second data processing unit.

2. The data communication system according to claim 1,
wherein the pilot tone transmitting unit disposes pilot tones in a plurality of channels that are selected while avoiding a frequency band in which a notch or noise exists and which has been detected beforehand.

3. The data communication system according to claim 1 or 2,
wherein the use channel selection unit changes only a channel within a frequency band, in which a notch or noise which has been detected by the detection unit exists, among a plurality of channels, so as to be located within a frequency band where the notch or the noise does not exist.

4. A data transmitting device that transmits data to a data receiving device through a power line, comprising:
a pilot tone transmitting unit that transmits a pilot tone to the data receiving device;
a channel information receiving unit that receives channel information, which is information on a frequency band where a notch or noise does not exist and is returned from the data receiving device in response to the pilot tone transmitted from the pilot tone transmitting unit;
a transmission channel setting unit that sets a channel used at the time of power line communication on the basis of the channel information received by the channel information receiving unit;
a first data processing unit that performs a process of disposing data, which is to be transmitted, in the channel set by the transmission channel setting unit; and
a data transmitting unit that transmits the data, which has been processed by the first data processing unit, to the data receiving device through the power line.

5. A data receiving device that receives data from a data transmitting device through a power line, comprising:
a pilot tone receiving unit that receives a pilot tone from the data transmitting device;
a detection unit that detects a notch or noise, which exists within a frequency band used for communication, according to a receiving state of the pilot tone received by the pilot tone receiving unit;
a use channel selection unit that selects a channel used when performing power line communication, avoiding a frequency band where the notch or the noise detected by the detection unit exists;
a channel information transmitting unit that transmits information on the channel selected by the use channel selection unit, as channel information, to the data transmitting device;
a data receiving unit that receives data from the data transmitting device;
a second data processing unit that performs a data restoring process by using data, which has been received by the data receiving unit, disposed in a channel where a notch or noise does not exist; and
a data reproducing unit that reproduces the data restored by the second data processing unit.

6. A data communication method when performing power line communication between a data transmitting device and a data receiving device, comprising:
a first step of transmitting a pilot tone from the data transmitting device to the data receiving device;
a second step of detecting a frequency band where a notch or noise exists, among frequency bands used for the power line communication, on the basis of the pilot tone transmitted from the data transmitting device in the first step, by means of the data receiving device;
a third step of transmitting information on the frequency band, in which the notch or the noise exists and which has been detected in the second step, as channel information, to the data transmitting device by means of the data receiving device;
a fourth step of setting a channel, which is located within a frequency band where a notch or noise does not exist, as a channel used for the power line communication on the basis of the channel information transmitted from the data receiving device in the third step, by means of the data transmitting device; and
a fifth step of disposing data, which is to be transmitted, in the channel set in the fourth step and then transmitting the data to the data receiving device, by means of the data transmitting device.

7. The data communication method according to claim 6,
wherein, in the first step, the pilot tone is transmitted from the data transmitting device to the data receiving device while consecutively changing a frequency of the pilot tone, and
in the second step, the data receiving device detects the frequency band where the notch or the noise exists, among the frequency bands used for the power line communication, on the basis of the pilot tone whose frequency consecutively changes and which has been transmitted from the data transmitting device in the first step.

8. The data communication method according to claim 6 or 7,
wherein a frequency band where a notch or noise does not exist is detected at predetermined time intervals even while the power line communication between the data transmitting device and the data receiving device is being performed, and a channel used for the power line communication is changed to a channel within the frequency band where the notch or the noise does not exist.

9. A data communication program when performing power line communication between a data transmitting device and a data receiving device, the data communication program causing a computer to execute:
a first step of transmitting a pilot tone from the data transmitting device to the data receiving device;
a second step of detecting a frequency band where a notch or noise exists, among frequency bands used for the power line communication, on the basis of the pilot tone transmitted from the data transmitting device in the first step, by means of the data receiving device;
a third step of transmitting information on the frequency band, in which the notch or the noise exists and which has been detected in the second step, as channel information, to the data transmitting device by means of the data receiving device;
a fourth step of setting a channel, which is located within a frequency band where a notch or noise does not exist, as a channel used for the power line communication on the basis of the channel information transmitted from the data receiving device in the third step, by means of the data transmitting device; and
a fifth step of disposing data, which is to be transmitted, in the channel set in the fourth step and then transmitting the data to the data receiving device, by means of the data transmitting device.
